# EUROPÄISCHE PATENTSCHRIFT

(11) **EP 1 456 722 B1**
(45) Veröffentlichungstag und Bekanntmachung des Hinweises auf die Patenterteilung: **24.01.2007**
(21) Anmeldenummer: 02795220.9
(22) Anmeldetag: 17.12.2002
(51) Int. Cl.: G05B 19/042

(54) **DATENÜBERTRAGUNGSVERFAHREN, SERIELLES BUSSYSTEM UND ANSCHALTEINHEIT FÜR EINEN PASSIVEN BUSTEILNEHMER**
DATA TRANSMISSION METHOD, SERIAL BUS SYSTEM AND SWITCH-ON UNIT FOR A PASSIVE STATION
PROCEDE DE TRANSMISSION DE DONNEES, SYSTEME DE BUS SERIEL ET UNITE DE CONNEXION POUR UN UTILISATEUR DE BUS PASSIF

(30) Priorität: 21.12.2001 DE 10163342
(43) Veröffentlichungstag der Anmeldung: 15.09.2004
(73) Patentinhaber: Beckhoff Automation GmbH, 33415 Verl (DE)
(72) Erfinder: BECKHOFF, Hans, 33415 Verl (DE); BÜTTNER, Holger, 12157 Berlin (DE)
(74) Vertreter: Wilhelm, Jürgen
(86) Internationale Anmeldenummer: PCT/EP2002/014423
(87) Internationale Veröffentlichungsnummer: WO 2003/054644

(56) Entgegenhaltungen:
- EP-A- 0 910 026
- WO-A-00/04428
- US-A- 5 914 957
- US-B1- 6 240 478
- US-B1- 6 320 871

## Beschreibung

Die Erfindung betrifft ein Verfahren zur Übertragung von Daten auf einem seriellen Bus zwischen wenigstens einem aktiven Busteilnehmer und wenigstens einem passiven Busteilnehmer, ein entsprechend ausgebildetes serielles Bussystem und eine Anschalteinheit für einen passiven Busteilnehmer in einem solchen seriellen Bussystem.

In der Fertigungs- und Prozessautomatisierung werden zunehmend serielle Bussysteme eingesetzt, bei denen die dezentral angeordneten Geräte einer Maschinenperipherie wie E/A-Module, Messumformer, Antriebe, Ventile und Bedienerterminals über ein leistungsfähiges Echtzeit-Kommunikationssystem mit Automatisierungs-, Engineering- oder Visualisierungssystemen kommunizieren. Alle Geräte sind dabei über einen seriellen Bus, vorzugsweise einem Feldbus, miteinander vernetzt, wobei der Datenaustausch über den Bus meistens auf der Grundlage des Master-Slave-Prinzip ausgeführt wird.

Die aktiven Busteilnehmer am Bussystem sind dabei die Steuereinrichtungen. Sie sind im Besitz einer Buszugriffsberechtigung und bestimmen den Datentransfer auf dem Bus. Die aktiven Busteilnehmer werden auch als Master-Geräte im seriellen Bussystem bezeichnet.

Passive Busteilnehmer sind dagegen in der Regel die Maschinenperipherie-Geräte. Sie erhalten keine Buszugriffsberechtigung, das heißt, sie dürfen nur empfangene Nachrichten quittieren oder auf Anfrage eines aktiven Busteilnehmers Nachrichten an diesen übermitteln. Passive Busteilnehmer werden deshalb auch als Slave-Geräte im seriellen Bussystem bezeichnet.

Die Master-Geräte enthalten im Allgemeinen eine Feldbusanschaltung, die das Bindeglied zwischen der zentralen Datenverarbeitung im Master-Gerät-und dem Feldbusnetz darstellt und die das Busmanagement durchführt. In der oft als separate Baugruppe ausgeführten Anschaltung ist deshalb auch das vollständige Busprotokoll implementiert. Die Slave-Geräte wiederum weisen ein Schnittstellenmodul auf, das die Daten aus dem Slave-Gerät in das Datenformat des Feldbussystems umsetzt. Diese Schnittstellenmodule benötigen deshalb auch nur einen geringen Teil des Busprotokolls.

In der Automatisierungstechnik werden Feldbussysteme nach dem Master-Slave-Prinzip mit unterschiedlichsten Übertragungsregeln eingesetzt. Bei zyklischen Feldbussystemen, wie zum Beispiel dem Profibus-DP, ControlNet, FIP-IO oder Interbus-S werde die Daten zyklisch übertragen, unabhängig davon, ob eine Änderung dieser Daten stattgefunden hat. Bei azyklischen Feldbussystemen dagegen, wie sie bei CAN-Systemen bekannt sind, werden Daten nur dann übertragen, wenn eine Änderung der Daten stattgefunden hat oder wenn die Datenübertragung explizit vom Master-Gerät angestoßen wird.

Unterschieden wird weiterhin auch zwischen stationsorientierten Feldbussystemen, wie dem Profibus-DP, bei denen ein Master-Gerät eine Nachricht an ein Slave-Gerät sendet, das dieses dann quittiert oder beantwortet, und nachrichtenorientierten Feldbussystemen, wie dem CAN-System, die sich dadurch auszeichnen, dass das Master-Gerät unbestätigte Nachrichten auf den Bus ausgibt, die dann von allen Busteilnehmern verarbeitet werden können. Weiterhin sind noch busorientierte Feldbussysteme, wie dem Interbus-S bekannt, bei denen das Master-Gerät mit einer Nachricht sämtliche Daten für alle angeschlossenen Slave-Geräte überträgt, wobei die Stelle der Daten für das jeweilige Slave-Gerät durch deren Position im Nachrichtenblock festgelegt ist.

Steuerungsprozesse, insbesondere bei in der Fertigung eingesetzten Automatisierungssystemen setzen sich in der Regel aus einem oder mehreren im Allgemeinen zyklisch auszuführenden Aufgaben zusammen, die im Weiteren auch als Tasks bezeichnet werden. Solche Tasks werden in einem Feldbussystem so ausgeführt, dass die Slave-Geräte, die die Maschinenperipherie darstellen, Eingangsprozessdaten über den Feldbus an das Master-Gerät, das als Prozesssteuerung fungiert, liefern. Im Master-Gerät werden dann entsprechend der ausführenden Task die Ausgangsprozessdaten erzeugt und über das Feldbussystem an die Slave-Geräte zurück übertragen.

Bei der herkömmlicher Weise ausgeführte Übergabe der Prozessdaten werden die Prozessdaten der Slave-Geräte gemäß dem verwendeten Busprotokoll von der Schnittstelleneinheit des jeweiligen Slave-Geräts auf den Feldbus ausgegeben und von der Feldbusanschaltung als der Schnittstelle des Master-Geräts mit dem Feldbus empfangen. Die Feldbusanschaltung im Master-Gerät stellt dann aus den empfangenen Prozessdaten der Slave-Geräte ein Prozessabbild für die jeweilige Task zusammen und gibt dieses Prozessabbild an die Datenverarbeitungseinheit im Master-Gerät weiter. Die Datenverarbeitungseinheit im Master-Gerät wiederum erstellt auf der Grundlage des Eingangsprozessbildes entsprechend der auszuführenden Task ein Ausgangsprozessbild, das an die Feldbusanschaltung ausgegeben wird, die aus diesem Prozessabbild dann die Prozessdaten für die einzelnen Slave-Geräte ermittelt und gemäß dem vorgesehenen Busprotokoll an das jeweilige Slave-Gerät über den Feldbus überträgt.

Bei den bekannten Feldbussystemen erfolgt die Prozessdatenübergabe zwischen dem Master-Gerät und den Slave-Geräten herkömmlicherweise so, dass die Prozessdaten für die einzelnen Prozessgeräte zu getrennten Datenpaketen, im weiteren auch als Telegramme bezeichnet, zusammengefasst sind und die Slave-Geräte dann einzeln adressiert werden.

Bei der Prozessdatenübergabe muss die Feldbusanschaltung im Master-Gerät deshalb eine aufwändige Zuordnung zwischen den von und zu den Slave-Geräten übertragenen Prozessdaten und dem der jeweiligen Task zuzuordnenden_Eingangs- und Ausgangs-prozessbildern ausführen. Dieses im Weiteren auch als Mapping bezeichnete Zuordnen der Prozessdaten der Slave-Geräte zu den im Master-Gerät verwendeten Prozessabbildern, die in der Feldbusanschaltung des Master-Geräts ausgeführt wird, erfordert jedoch einen hohen Verarbeitungsaufwand. Es muss deshalb in der Feldbusanschaltung auch ein komplexer Mapping-Algorithmus und Protokollablauf installiert werden. Dies gilt um so mehr für offene Feldbus-Systeme, die so ausgelegt werden, dass ohne großen Aufwand Busteilnehmer aus dem Gesamtsystem entfernt bzw. in das System eingefügt werden können.

Die erforderliche Umsetzung der Prozessdaten der einzelnen Slave-Geräte in Prozessabbildern in der Feldbusansteuerung, insbesondere dann, wenn mehrere Tasks gleichzeitig ausgeführt werden sollen, führt darüber hinaus zu einer erheblich verzögerten Prozessverarbeitung.

Dies gilt vor allem dann, wenn eine Steuerungsapplikation aus mehreren Teilprozessen besteht, die jeweils einem Slave-Gerät zugeordnet sind. Bei herkömmlichen Feldbussen muss dann das der Steuerungsapplikation zugeordnete Prozessabbild in entsprechende Einzeltelegramme für die jeweiligen Slave-Geräte aufgeteilt werden. Im Fall, dass die Prozessdaten einer Task dagegen mehrere Slave-Geräte zur Verfügung gestellt werden müssten, da alle diese Slave-Geräte diese Task ausführen sollen, muss die Feldbusansteuerung dann für jedes Slave-Gerät ein eigenes Telegramm mit den Prozessdaten zusammenstellen.

Weiterhin besteht dann, wenn die einzelnen Teilprozesse unterschiedliche Zykluszeiten aufweisen, bei herkömmlichen Datenübertragungsverfahren auf Feldbus nicht die Möglichkeit, die Buslast für die einzelnen Teilprozesse entsprechend den unterschiedlichen Zykluszeichen anzupassen und somit eine optimale Busauslastung zu erreichen.

Darüber hinaus ist bei herkömmlichen Feldbussytemen eine flexible Anpassung der Telegramme an die in den Slave-Geräten erforderlichen Prozessdatenlängen nur sehr schwer zu erreichen. So ist dann, wenn ein Slave-Gerät nur 1-Bit-Prozessdaten benötigt, im Allgemeinen ein zusätzlicher Buskoppler mit einem lokalen Busnetz nötig, um diese 1-Bit-Prozessdaten in die Telegramme des Standard-Feldbusses umzusetzen.

Aufgabe der vorliegender Erfindung ist es, die bekannten seriellen Bussysteme, insbesondere Feldbussysteme, so weiterzubilden, dass eine flexible Datenübertragung mit vermindertem Datenverarbeitungsaufwand ermöglicht wird.

Diese Aufgabe wird durch ein Verfahren nach Anspruch 1, ein serielles Bussystem nach Anspruch 7 und eine Anschalteinheit nach Anspruch 11 gelöst. Bevorzugte Ausführungsformen sind in den abhängigen Ansprüchen angegeben.

Gemäß der Erfindung werden zum Übertragen von Daten auf einem seriellen Bussystem mit wenigstens einem aktiven Busteilnehmer und wenigstens einem passiven Busteilnehmer Daten in Form von Telegrammen zwischen dem aktiven und dem passiven Busteilnehmer übertragen, wobei die Telegramme jeweils eine logische Adresse enthalten, um die übertragenen Daten zu kennzeichnen, wobei der passive Busteilnehmer eine Zuordnungstabelle enthält, in der logische Adressen von Telegrammen mit physikalischen Adressen von Datenspeicherbereichen des passiven Busteilnehmers korreliert sind, wobei beim Durchlauf eines Telegramms auf dem seriellen Bus der Busteilnehmer die logische Adresse des durchlaufenden Telegramms mit dem in der Zuordnungstabelle gespeicherten logischen Adressen vergleicht und beim Feststellen einer Übereinstimmung einen Datenaustausch mit dem Telegramm durchführt.

Durch die erfindungsgemäße Auslegung des seriellen Busses bzw. der Datenübertragung auf diesem seriellen Bus, bei dem jeder Busteilnehmer mit seiner Anschalteinheit einen in Form von Telegrammen übertragenen Datenstrom beliebige vorher konfigurierte Daten entnehmen bzw. einfügen kann, wird eine hohe Flexibilität bei der Datenübertragung zwischen den Busteilnehmern mit gleichzeitig geringem Datenverarbeitungsaufwand erreicht. Insbesondere ist damit eine vereinfachte Prozessdatenübertragung von Steuerungsapplikationen zwischen dezentral an den seriellen Bus angeschlossenen Geräten möglich.

Bei der erfindungsgemäßen Auslegung kann für die Zuordnungstabelle der dezentral an den seriellen Bus angeschlossenen passiven agierenden Geräte jeweils individuell festgelegt werden, welche Daten in den auf den Bus übertragenen Telegrammen dem jeweiligen dezentralen Gerät zugeordnet sind. Darüber hinaus können mit Hilfe der Telegramme und der in dem passiven Busteilnehmer vorgesehenen Zuordnungstabelle Daten entsprechend der jeweiligen Prozessanforderungen und unabhängig von ihrer physikalischen Position übertragen werden.

Gemäß der Erfindung ist es insbesondere möglich, mithilfe der Telegramme Datenaufkommen an die jeweiligen Erfordernisse der passiven Busteilnehmer anzupassen, wobei sich z.B. auch Telegramme mit 1-Bit-Prozessdaten für passive Busteilnehmer realisieren lassen. Damit können kostengünstige serielle Bussysteme ohne zusätzliche Buskoppler und lokale Busnetze ausgeführt werden.

Weiterhin kann mithilfe der erfindungsgemäßen Datenübertragung das Datenaufkommen auf dem seriellen Bus an die jeweiligen Zykluszeiten von Teilprozessen angepasst werden, wodurch eine optimale Busauslastung erreicht werden kann.

Weiterhin wird durch die erfindungsgemäße Ausführung ein aufwändiger Mapping-Vorgang im aktiven Busteilnehmer vermieden, mit dem die den einzelnen passiven Busteilnehmern zugeordneten Prozessdaten mit den entsprechenden Prozessabbildern der Steuerungsapplikation korreliert werden. Der Mapping-Vorgang wird nämlich über die Zuordnungstabelle bereits in den passiven Busteilnehmern selbst durchgeführt, wodurch der Datenverarbeitungsaufwand im aktiven Busteilnehmer wesentlich reduziert und damit ein erheblicher Zeitgewinn beim Durchführen der Steuerungsaufgaben erreicht wird. Darüber hinaus wird durch die Verlagerung des Zuordnungsvorgangs in die passiven Busteilnehmer der Geräte- und Implementieraufwand wesentlich vermindert.

Gemäß einer bevorzugten Ausführungsform ist in der Schnittstelleneinheit der passiven Busteilnehmer die eingespeicherte Zuordnungstabelle in Registerdatensätze unterteilt, die jeweils eine logische Adresse von über den seriellen Bus in einem Telegramm übertragenen Daten, eine physikalische Adresse der den Daten zugeordneten Datenspeicher im passiven Busteilnehmer und eine Datenübertragungsart angeben. Die erfindungsgemäße Ausgestaltung des Mapping-Vorgangs und der Datenübertragung im passiven Busteilnehmer sorgt für einen besonders einfachen und schnell durchzuführenden Zuordnungsvorgang bei nur geringem Implementier- und Protokollaufwand im passiven Busteilnehmer. Insbesondere ist es mit dieser Auslegung des Zuordnungsvorgangs im passiven Busteilnehmer möglich, auf einfache Weise den Datentransfer zwischen den auf dem seriellen Bus zirkulierenden Telegrammen und den dem jeweiligen passiven Busteilnehmer zugeordneten Datenspeichern vorzunehmen.

Gemäß einer weiteren bevorzugten Ausführungsform wird die Zuordnungstabelle im passiven Busteilnehmer während einer Initialisierungsphase erzeugt, wobei der aktive Busteilnehmer dem passiven Busteilnehmer die logischen Adressen von für den passiven Busteilnehmer relevanten Daten in den einzelnen Telegrammen mitteilt und der passive Busteilnehmer den logischen Adressen dann jeweils physikalische Adressen von Datenspeichern zuordnet. Durch diese Ausgestaltung ist eine hohe Flexibilität bei der Datenübertragung und insbesondere eine Anpassung an die jeweilig gewünschte Steuerapplikation möglich. Den passiven Busteilnehmern kann nämlich individuell mitgeteilt werden, welche Prozessdaten vom aktiven Busteilnehmer, also dem Steuerungsgerät, übertragen werden und wo sich diese Prozessdaten in dem auf dem seriellen Bus zirkulierenden Telegrammen befinden.

Die Erfindung wird anhand der beigefügten Zeichnungen näher erläutert. Es zeigt
Figur 1 eine schematische Darstellung eines seriellen Bussystems;
Figur 2 eine auf herkömmliche Weise ausgeführte Prozessdatenübergabe in einem seriellen Bussystem, das für Steuerapplikationen eingesetzt wird;
Figur 3 eine schematische Darstellung eines seriellen Bussystems mit erfindungsgemäßen Schnittstelleneinheiten in den Slave-Geräten;
Figur 4 eine erfindungsgemäße Prozessdatenübergabe in einem seriellen Bussystem, das für Steuerapplikationen eingesetzt wird;
Figur 5 eine Anordnung der Telegramme mit den Prozessabbildern von Tasks auf einem zyklischen Feldbus im seriellen Bussystem;
Figur 6 ein Ablaufdiagramm in einer erfindungsgemäßen Schnittstelleneinheit eines Slave-Geräts beim Empfang eines Read-Telegramms; und
Figur 7 ein Ablaufdiagramm in einer erfindungsgemäßen Schnittstelleneinheit eines Slave-Geräts beim Empfang eines Write-Telegramms.

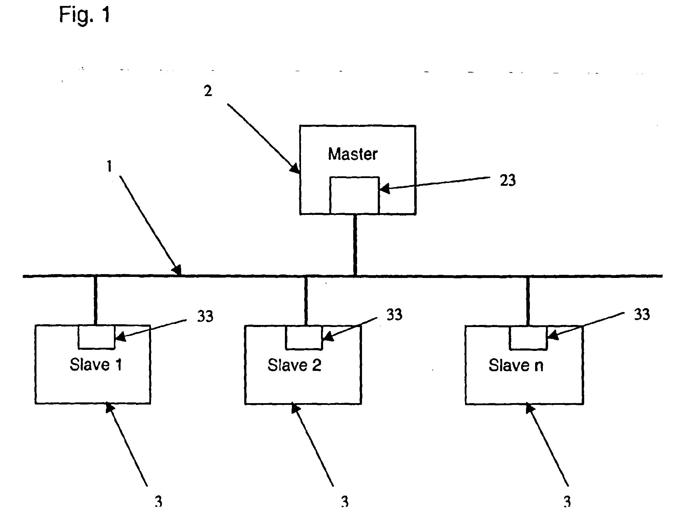

In der Automatisierungstechnik werden zunehmend Feldbussysteme eingesetzt, bei denen verteilt angeordnete Geräte der Maschinenperipherie mit Automatisierungs-, Engineering- und Visualisierungssystemen über einen Feldbus kommunizieren. Ein solches Feldbussystem ist in Figur 1 gezeigt.

Das Feldbussystem weist einen seriellen Bus 1 auf, welcher zum Beispiel eine elektrische Leitung, ein Lichtleiter oder auch ein Radiokabel sein kann. An diesen Bus 1 sind alle Busteilnehmer angeschlossen, wobei zwischen aktiven und passiven Busteilnehmer unterschieden wird. Die aktiven Busteilnehmer am Feldbussystem sind die Master-Geräte 2, die den Datenverkehr auf dem Bus bestimmen. Ein solches Master-Gerät ist zum Beispiel ein Industrie-PC, der als Prozessleitrechner in eines Fertigungsverfahrens dient. Dieses Master-Gerät 2 besitzt eine Buszugriffsberechtigung und kann Daten ohne externe Aufforderung auf den Bus 1 ausgeben. Die passiven Busteilnehmer am Bussystem sind die Maschinenperipheriegeräte, wie zum Beispiel E/A-Geräte, Ventile, Antriebe und Messumformer. Sie dienen als Slave-Geräte 3 und erhalten keine Buszugriffsberechtigung, das heißt sie dürfen nur empfangene Nachrichten quittieren oder auf Anfrage eines Master-Geräts Nachrichten an diesen übermitteln.

Das Master-Gerät 2 und die Slave-Geräte 3 können direkt an den Bus 1 angeschlossen sein oder über eigenständige Interface-Bausteine mit diesem verbunden werden. Die Art der Datenübertragung auf dem Bus 1 wird von einem Kommunikationsprotokoll festgelegt, wobei unterschiedlichste Protokollarchitekturen abhängig von der auf dem seriellen Bus 1 gewählten Übertragungsphysik möglich sind. Diese Busprotokoll ist im Master-Gerät 2, vorzugsweise in einer Feldbusanschaltung 23 implementiert. Die für die Slave-Geräte 3 notwendigen Busprotokollteile sind in einer Zuordnungseinheit 33 abgespeichert.

Prozesse in der Automatisierungstechnik bestehen in der Regel aus verschiedenen Teilprozessen, die durch ein unterschiedliches Zeitverhalten geprägt sind. Daher weisen die Steuerapplikationen, die diese Prozesse steuern, überwachen und regeln, im Allgemeinen mehreren zyklischen Steuerungsaufgaben mit unterschiedlichen Zykluszeiten auf, die jeweils über Eingangs- und Ausgangsprozessabbilder verfügen. Die Prozessdaten sind dabei in der Regel auf viele passive Busteilnehmer verteilt, die die Schnittstellen zum Prozess bilden. Die Prozesssignale werden dabei über den seriellen Bus je nach Feldbussystem mit unterschiedlichen Verfahren in dem Master-Gerät mit den Steuerungsapplikationen und den passiven Busteilnehmern aktualisiert und in Prozessbildern dargestellt.

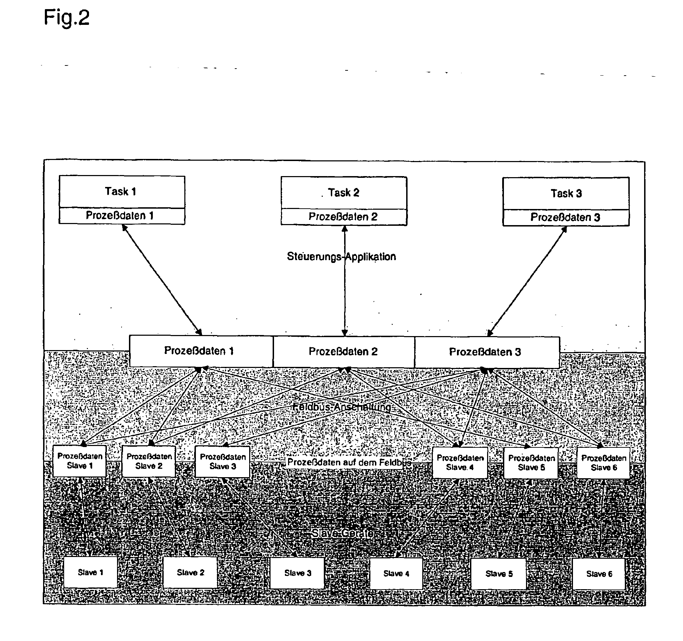

Figur 2 zeigt als Beispiel einen herkömmlichen Datentransfer zwischen dem Master-Gerät 2, das die Steuerungsapplikation und die Feldbusansteuerung enthält, und den Slave-Geräten 3 zur Durchführung von drei Steuerungsaufgaben, die als Task 1, Task 2 und Task 3 im Master-Gerät abgelegt sind. Zur Ausführung dieser Steuerungsaufgaben werden im Master-Gerät 2 Eingangs- und Ausgangsprozessbilder verwendet, wobei in Figur 2 das Eingangsprozessbild für Task 1 als Prozessdaten 1, das Eingangsprozessbild für Task 2 als Prozessdaten 2 und das Eingangsprozessbild für Task 3 als Prozessdaten 3 dargestellt sind. Diese Eingangsprozessbilder werden von der Feldbusanschaltung 23 im Master-Gerät 2 auf der Grundlage der von den Zuordnungseinheiten 33 der einzelnen Slave-Geräte 3 über den Feldbus gelieferten Prozessdaten erzeugt.

Um die für die Slave-Geräte 3 relevanten Daten den einzelnen Tasks, also die Prozessdaten den Prozessabbildern zuzuordnen, wird im Stand der Technik ein als ein Mapping bezeichnetes Zuordnungsverfahren der Prozessdaten der einzelnen Slave-Geräte zu den Prozessabbildern durchgeführt. Dieser herkömmliche Mapping-Algorithmus, der von die Feldbusanschaltung 23 im Master-Gerät 2 durchgeführt wird, ist jedoch insbesondere bei den offenen Feldbussystemen, bei denen Slave-Geräte beliebig zu- und abgeschaltet werden können, aufwändig auszuführen. Weiterhin werden die Prozessabbilder für die einzelnen Tasks von der Feldbusanschaltung 23 nacheinander erzeugt, was zu erheblichen Zeitverlusten bei der Ausführungen der Tasks führen kann.

Bei dem in Figur 2 gezeigten, herkömmlichen Datentransfer müssen gemäß der dargestellten Steuerungsapplikation Prozessdaten der Task 1 mit den Slave-Geräten 1, 2 und 5, Prozessdaten der Task 2 mit den Slave-Geräten 2, 4 und 6 und Prozessdaten der Task 3 mit den Slave-Geräten 1, 3 und 4 ausgetauscht werden, wobei den einzelnen Slave-Geräten jeweils nur Teile der den einzelnen Tasks zugeordneten Prozessdaten zugeordnet sind, da die jeweiligen Slave-Geräte nur Teilprozesse der Tasks ausführen. Bei herkömmlichen Feldbussystemen besteht jedoch nicht die Möglichkeit, die Telegramme entsprechend anzupassen, so dass die jeweiligen Slave-Geräte nur die ihnen zugeordneten Prozessdaten erhalten. Insbesondere lassen sich die Telegramme dabei auch nicht so gestalten, dass das Datenaufkommen auf dem Feldbus an die unterschiedlichen Zykluszeiten der Teilprozesse angepasst ist.

Um den Datentransfer zu den Slave-Geräten an die jeweiligen Steuerungsapplikationen optimal anpassen zu können und dabei insbesondere die Verzögerungszeiten beim Mapping der Prozessdaten des Slave-Geräts in die Prozessbilder des Master-Geräts so gering wie möglich zu halten und um eine einfache Implementierung des Übertragungsprotokolls im Master-Slave-Bussystem zu erreichen, wird gemäß der Erfindung auf den seriellen Bus ein Datenstrom in Form von Telegrammen so zur Verfügung gestellt, dass jedes Slave-Gerät genau die für ihn bestimmten Daten entnehmen bzw. einfügen kann.

Gemäß der Erfindung wird dann das Mapping direkt im jeweiligen Slave-Geräte durchgeführt, wodurch ein paralleler Mappingvorgang in allen Slave-Geräten möglich ist, was das Master-Gerät entlastet und für einen erheblichen Zeitgewinn beim Durchführen der Steuerungsaufgaben sorgt. Darüber hinaus wird durch den erfindungsgemäßen Mappingvorgang der Geräte- und Implementieraufwand im Feldbussystem erheblich reduziert.

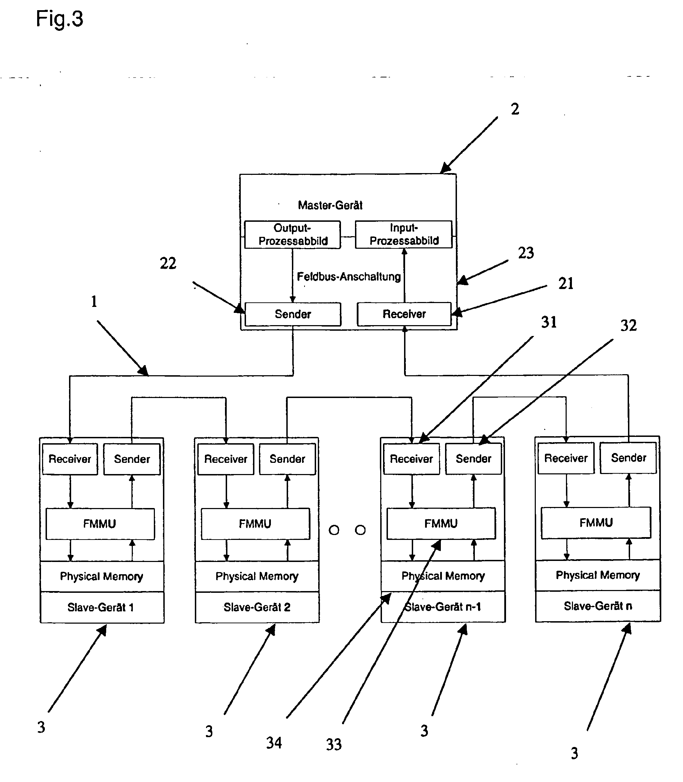

Figur 3 zeigt eine mögliche Ausführungsform der Erfindung, bei der als serieller Bus ein zyklischer Feldbus, wie zum Beispiel ein Profibus-DP eingesetzt wird. Bei einem solchen zyklischen Feldbus werden die Prozessdaten mit der der jeweiligen Steuerungsaufgabe zugeordneten Zykluszeit auf der Busleitung 1 übertragen, wobei die Datenübertragung unabhängig davon stattfindet, ob sich die Daten innerhalb dieser Zykluszeit geändert haben. Die Erfindung ist jedoch nicht auf eine solchen zyklischen Feldbus beschränkt. Alternativ kann der Feldbus auch azyklisch ausgestaltet sein, wie zum Beispiel bei einem CAN-Bus, bei dem die Prozessdaten nur dann übertragen werden, wenn sie sich geändert haben oder wenn die Datenübertragung explizit durch das Master-Gerät angestoßen wird.

Wie Figur 3 zeigt, weist das Master-Gerät 2 und jedes der Slave-Geräte 3 jeweils einen Sender 22, 32 zum Ausgeben von Daten auf die Busleitung 1 und einen Empfänger 21, 31 in Figur 3 auch als Receiver bezeichnet, zum Empfangen von Daten von dieser Busleitung 1 auf. Sender und Empfänger für ein Gerät können dabei in einer eigenständigen Einheit in Form einer Busanschaltung zusammengefasst sein oder auch im Master-Gerät bzw. den Slave-Geräten selbst integriert werden. Der Bus 1 kann als eine elektrische Leitung oder auch Lichtleitfaser ausgeführt sein.

Der Sender 21 und der Empfänger 22 des Master-Geräts 2 sind mit der Feldbusanschaltung 23 im Master-Gerät 2 verbunden, in der das gesamte Busprotokoll implementiert ist und das so den Datentransfer über den Feldbus steuert. Diese Feldbusanschaltung 23 ist über eine Schnittstelle mit einer Datenverarbeitungseinheit im Master-Gerät 2 verbunden, um dem Master-Gerät 2 die zur Abarbeitung der Steuerungsausgaben notwendigen Eingangsprozessabbilder zu übergeben bzw. die vom Master-Gerät erzeugten Ausgangsprozessabbilder zu übernehmen.

Die Slave-Geräte 3 enthalten jeweils die Zuordnungseinheit 33, die mit dem Empfänger 31 und dem Sender 32 verbunden ist. In dieser Zuordnungseinheit 33, im weiteren auch als FMMU (Fieldbus Memory Management Unit) bezeichnet, ist der für das jeweilige Slave-Gerät notwendige Teil des Busprotokolls implementiert. Die Zuordnungseinheit 33 in den Slave-Geräten 3 steuert die Datenübergabe zwischen den sich auf der Busleitung 1 befindenden Datenpaketen, im weiteren auch als Telegramme bezeichnet, und den in einem Datenspeicher 34 des Slave-Geräts 3, in Figur 3 auch als physikalisches Memory bezeichnet, abgelegten Prozessdaten. Diese Prozessdaten können zum Beispiel Messdaten oder Steuerungsdaten zum Ausführen eines Fertigungsvorgangs durch das jeweilige Slave-Gerät sein.

Die FMMU-Einheit 33 im Slave-Gerät 3 kann als eigenständige Baueinheit ausgebildet sein oder in eine Steuereinheit integriert werden. Weiterhin besteht die Möglichkeit, die Funktionen der FMMU-Einheit 33 zum Beispiel in Form eines ASIC-Chips für das jeweilige Slave-Gerät zu definieren oder auch als Softwarelösung auf einem Mikrocontroller im Slave-Gerät zu implementieren.

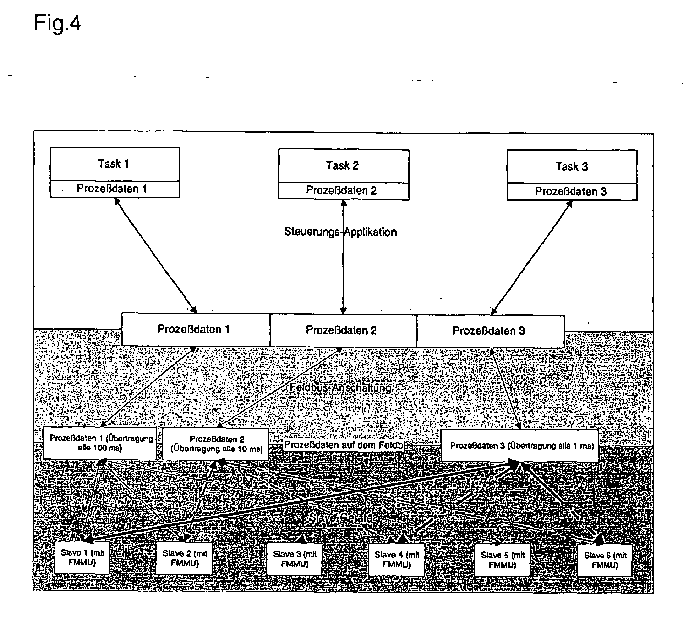

Figur 4 zeigt schematisch eine Datenübertragung, wie sie auf dem in Figur 3 gezeigten Feldbussystem ausgeführt werden kann. Ähnlich wie bei der in Figur 2 gezeigten herkömmlichen Prozessdatenübergabe wird angenommen, das vom Master-Gerät 2 drei Steuerungsaufgaben, Task 1, Task 2 und Task 3, ausgeführt werden. Diesen Steuerungsaufgaben ist jeweils ein Prozessabbild mit Prozessdaten 1, 2, 3 zugeordnet. Diese Prozessabbilder für die einzelnen Tasks werden zwischen der Datenverarbeitungseinheit des Master-Geräts 2 und der Feldbusanschaltung 23 ausgetauscht, wobei die Prozessabbilder von der Feldbusanschaltung 23 dann mit Hilfe des Senders 21 auf den Feldbus 1 ausgegeben bzw. über den Empfänger 22 von diesem aufgenommen werden.

Bei dem in Figur 3 gezeigten zyklischen Feldbus werden die Prozessabbilder für das Master-Gerät 2 prozessdatenorientiert übertragen, das heißt, das Prozessabbild einer Task wird je nach Größe in ein oder mehrere Telegramme aufgeteilt, die auf dem Feldbus zirkulieren. Die den jeweiligen Slave-Geräten zugeordneten Prozessdaten der als Telegramme auf den Feldbus übertragenen Prozessabbilder werden unter Steuerung der FMMU-Einheit 33 im jeweiligen Slave-Gerät 3 durch den Empfänger 31 des Slave-Geräts 3 eingelesen bzw. über den Sender 32 des Slave-Geräts 3 ausgegeben. Die Zuordnung der Prozessdaten des Slave-Geräts 3 zu den Prozessabbildern, die in Telegramm-Form auf dem Feldbus übertragen werden, erfolgt dabei durch die FMMU-Einheit 33 im Slave-Gerät 3, so dass diese Zuordnung der Prozessdaten zu den Prozessabbildern von allen Slave-Geräten am Feldbus gleichzeitig während des Durchlaufs ausgeführt werden kann.

Bei der in Figur 4 dargestellten Datenübertragung wird es auf einfache Weise möglich die Slave-Geräte je nach Steuerungsapplikation so zu konfigurieren, dass ihre Prozessdaten mit verschiedenen Telegrammen übertragen werden können. Den Slave-Geräten wird in einer Initialisierungsphase vom Master-Gerät mitgeteilt, mit welchen Telegrammen ihre Prozessdaten übertragen werden, in welchen Teil des zugeordneten Datenspeichers die Prozessdaten abgelegt sind und wo sich diese Prozessdaten in den Telegrammen befinden. Während des zyklischen Steuerbetriebs gehen dann über den Feldbus Telegramme mit Prozessbildern, aus denen die Slave-Geräte ihre Ausgangsprozessdaten entnehmen bzw. ihre Eingangsprozessdaten einfügen.

Es besteht so wie in Figur 4 gezeigt, eine einfache und kostengünstige Möglichkeit, mit Hilfe der Telegramme einen Datentransfer der Prozessdaten von Task 1 zu den Slave-Geräten 1, 2 und 5, der Prozessdaten für die Task 2 zu den Slave-Geräten 2, 4 und 6 und die Prozessdaten der Task 3 zu den Slave-Geräten 1, 3, 4 und 6 auszuführen. Weiterhin kann gemäß der Erfindung der Datentransfer so ausgeführt werden, dass den Slave-Geräten 1 und 2 nur ein Teil der Prozessdaten mit dem Telegramm 1 zur Verfügung gestellt wird, die weiteren Teile der Prozessdaten dann aber mit den Telegrammen 2 und 3 übertragen werden. Der in Figur 4 dargestellte Datenübertragungsvorgang eignet sich insbesondere zur Steuerung einer Applikation, die aus drei Teilprozessen besteht, wobei beim ersten Teilprozess die Signale sich zum Beispiel alle 100 msec, beim zweiten Teilprozess alle 10 msec und beim dritten Teilprozess alle 1 msec ändern und der erste Teilprozess Prozessdaten vom Slave-Gerät 1, 2 und 5, der zweite Teilprozess Prozessdaten vom Slave-Gerät 2, 4 und 6 und der dritte Teilprozess Prozessdaten vom Slave-Gerät 1, 3, 4 und 6 benötigt.

Durch die erfindungsgemäße Datenübertragung besteht so die Möglichkeit, Telegramme für Slave-Geräte zu realisieren, die nur 1-Bit-Prozessdaten benötigen. Es ist deshalb nicht mehr, wie bei herkömmlichen Feldbussystemen, erforderlich, die Telegramme vom Standard-Feldbus in einen lokalen Bus zu den Slave-Geräten, die 1-Bit-Prozessdaten übertragen, umzusetzen, wodurch eine vereinfachte und kostengünstige Slave-Anschaltung erreicht wird.

Durch die flexible Ausgestaltung der Telegramme ist es auch möglich, dass Datenaufkommen auf dem Feldbussystem an Teilprozesse mit unterschiedlichen Zykluszeiten anzupassen. So kann durch entsprechend ausgelegte Telegramme ohne weiteres eine Datenübertragung ausgeführt werden, bei der Prozessdaten für Task 1 jede msec übertragen werden, wobei die Übertragungsdauer der Prozessdaten 0,5 msec beträgt, die Prozessdaten der Task 2 alle 10 msec übertragen werden, wobei die Übertragungsdauer der Prozessdaten 2 msec beträgt, und die Prozessdaten der Task 3 alle 100 msec übertragen werden, wobei die Übertragungsdauer 10 msec beträgt. Durch entsprechende Anpassung der Telegramme wird eine Datenübertragung mit einer 80%-igen Buslast erreicht, wobei die Prozessdaten von Task 2 und 3 jeweils in mehreren Telegrammen übertragen werden, da für Task 2 und 3 nur 0,5 msec in jeder Periode von 1-msec-Periode zur Verfügung stehen.

Durch diese in Figur 4 schematisch gezeigte, parallel in den allen Slave-Geräten von den jeweiligen Schnittstelleneinheiten ausgeführte Zuordnung der Prozessdaten zu den auf dem Feldbus zirkulierenden Prozessabbildern, wird die Feldbusanschaltung im Feldbussystem wesentlich entlastet. Darüber hinaus kann mit Hilfe eines einem einfachen Mapping-Algorithmus in der FMMU-Einheit 33 der Zuordnungsvorgang zwischen den Prozessdaten des jeweiligen Slave-Geräts 3 und den zugehörigen Prozessabbildern des Master-Geräts 2 ausgeführt werden, der nur einen geringen Protokoll- und Implementieraufwand nach sich zieht.

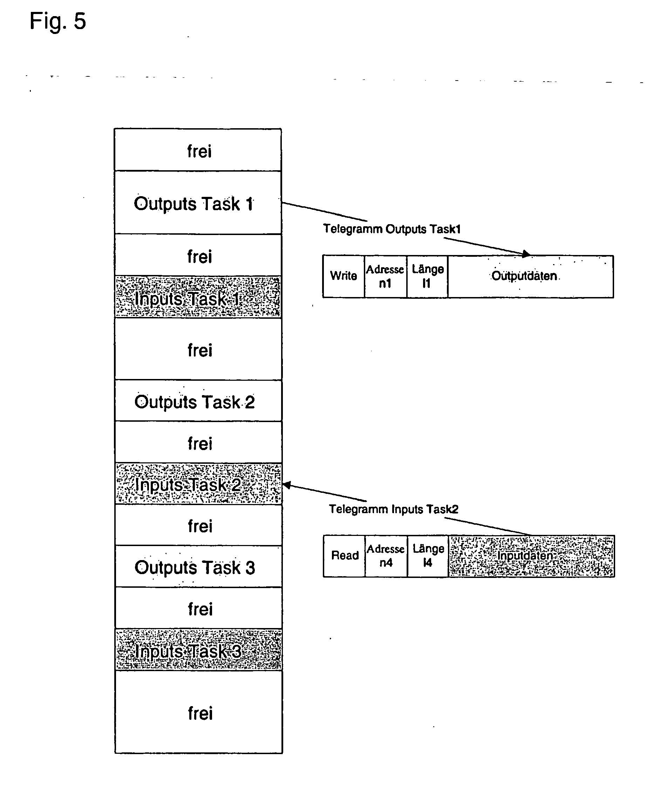

Figur 5 zeigt im Detail die Anordnung der Telegramme auf dem in der Ausführungsform nach Figur 3 eingesetzten zyklischen Feldbus. Der Feldbus kann dabei als eine Art logischer Speicher betrachtet werden, wobei die als Telegramme gestellten Prozessabbilder der einzelnen Tasks beliebig in dem logischen Speicher verteilt sein können. Figur 5 zeigt schematisch eine mögliche Anordnung der Telegramme für die in Figur 4 dargestellten drei Tasks des Master-Geräts im logischen Speicher des Feldbus. Zwischen den einzelnen Tasks können dabei beliebige von Prozessabbildern freie Bereiche im logischen Speicher des Feldbusses vorgesehen sein.

Jedes Telegramm einer Task setzt sich aus zwei Teilen zusammen, einem Kopfteil, der als logischer Adressblock dient, und einem Datenteil. Der logische Adressblock des Telegramms ist wiederum in drei Speicherbereiche unterteilt, wobei der erste Speicherabschnitt die Datenübertragungsart angibt, d.h. ob die Daten vom Master-Gerät ins Slave-Gerät eingeschrieben werden sollen (Write-Befehl) und/oder ob die Daten aus dem Slave-Gerät zum Master-Gerät übertragen werden sollen (Read-Befehl). In einem zweiten Speicherabschnitt sind dann die im Telegramm enthaltenen Daten mit einer Adresse gekennzeichnet. Als weiteren Speicherbereich enthält der logische Adressblock eine Information über die Länge der im Telegramm enthaltenen Daten. An den Adressblock schließt sich ein Datenteil an, in dem die Prozessdaten enthalten sind.

Damit die FMMU-Einheit 33 des jeweiligen Slave-Geräts 3 die ihm zugeordneten Prozessdaten in den Telegrammen auf dem seriellen Bus erkennt, enthält diese FMMU-Einheit 33 eine Zuordnungstabelle mit mehreren Registerdatensätzen, die den logischen Speicher des Feldbusses, der die Prozessabbilder enthält, mit dem physikalischen Speicher im jeweiligen Slave-Gerät, der die Prozessdaten enthält, korrelieren. Jeder Registerdatensatz umfasst dabei die folgenden Register, die einen zusammenhängenden Speicherbereich auf dem als logischen Speicher aufgefassten Feldbus beschreiben: Startadresse des logischen Speichers. (Feldbus); Endadresse des logischen Speichers (Feldbus); Startadresse des physikalischen Speichers (Slave); Art der Datenübertragung "Write", "Read" oder "Read/Write".

Jeder Registerdatensatz gibt so den Beginn der dem jeweiligen Slave-Gerät zugeordneten Daten auf dem logischen Speicher im Feldbus an. Durch das Festlegen des Datenendes im Registersatz ist dann die Länge der dem jeweiligen Slave-Gerät zugeordneten Daten im logischen Feldbus-Speicher festgelegt. Statt einer Endadresse könnte der Registerdatensatz deshalb auch eine Information über die Länge des Datenbereichs im logischen Speicher enthalten. Die im Registerdatensatz enthaltene Information über den Beginn des Datensatzes im physikalischen Speicher des Slave-Geräts sorgt dann für die Zuordnung der auf dem Feldbus enthaltenen Daten in den Telegrammen zu den Daten im Slave-Gerät. Der Typ der Datenübertragung im Registersatz legt abschließend fest, ob ein Schreib- oder Lesevorgang oder ein kombinierter Lese-Schreibvorgang zwischen Slave-Gerät und dem Feldbus vorgenommen werden soll.

Die Registerdatensätze in den Slave-Geräte werden in einer Initialisierungsphase des Feldbussystems erzeugt. Während des zyklischen Datenverkehrs über den Feldbus werden dann jeweils der aktuell gesendete Bereich des als logischen Speicher aufgefassten Feldbusses mit den Registerdatensätzen der Schnittstelleneinheit im jeweiligen Slave-Gerät von einer Vergleichseinheit verglichen und bei Übereinstimmung mit Hilfe einer Zugriffseinheit dann die entsprechenden Prozessdaten aus dem Telegramm auf den Feldbus ausgelesen bzw. in dieses eingegeben.

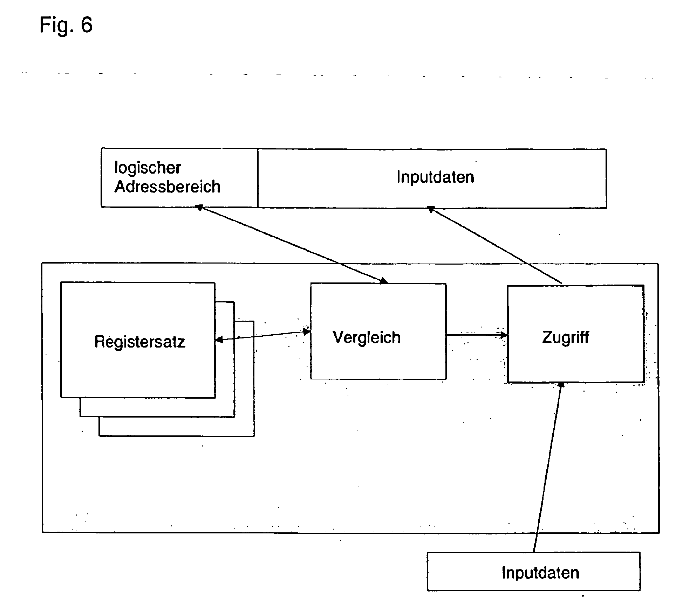

Figur 6 zeigt den Verarbeitungsablauf in der Schnittstelleneinheit eines Slave-Geräts beim Empfang eines Read-Telegramms. Die Kopfteile der auf dem Feldbus zirkulierenden Telegrammen werden in der Schnittstelleneinheit mit den eingespeicherten Registerdatensätzen verglichen. Falls dieser Vergleich zeigt, dass der Datenteil des Telegramms Bereiche enthält, die dem Slave-Gerät zuzuordnen sind, werden diese Datenbereiche aus dem physikalischen Speicher des Slave-Geräts ausgelesen und in das entsprechende Telegramm auf dem Feldbus eingegeben.

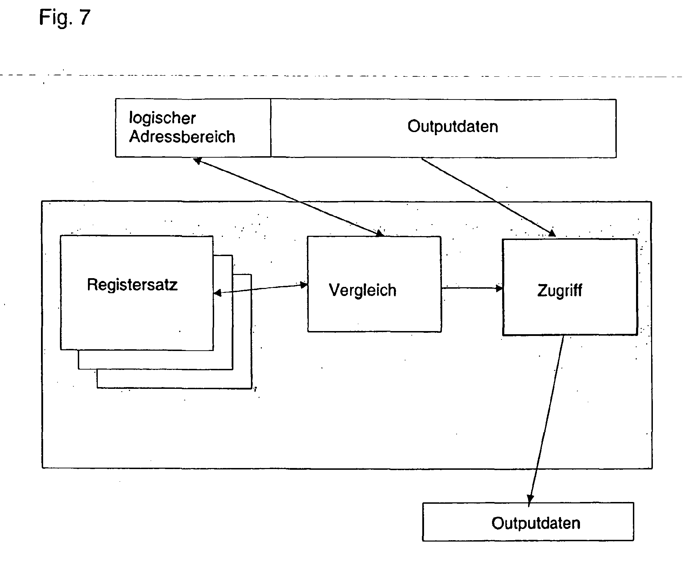

Figur 7 zeigt den Verarbeitungsablauf in der FMMU-Einheit eines Slave-Geräts beim Empfang eines Write-Telegramms. Hierbei werden wiederum die Kopfteile der Telegramme auf dem Feldbus mit den Registerdatensätzen verglichen. Wenn eine Übereinstimmung festgestellt wird und im Registerdatensatz angezeigt ist, das ein Schreibvorgang vorgenommen werden soll, werden die entsprechenden Daten aus dem Telegramm auf dem Feldbus ausgelesen und in den physikalischen Speicher des Slave-Geräts eingespeichert.

Alternativ zu den in Figur 6 und 7 gezeigten Telegrammausgestaltungen besteht auch die Möglichkeit, ein Read/Write-Telegramm im Slave-Gerät zu verarbeiten. Wenn nach Vergleich des Kopfteils des Telegramms auf dem Feldbus mit den Registerdatensätzen eine Übereinstimmung ermittelt wird, können dann während des Telegrammdurchlaufes vom Slave-Gerät die entsprechenden Daten aus dem Telegramm ausgelesen und in den physikalischen Speicher des Slave-Geräts eingeschrieben werden und gleichzeitig können Datenbereiche aus dem physikalischen Speicher des Slave-Geräts ausgelesen und an den entsprechenden Stellen des Telegramms eingeschrieben werden. Der Verarbeitungsablauf ist dabei vorzugsweise so limitiert, dass maximal so viel Daten in das Telegramm eingeschrieben werden können, wie entsprechende Daten aus dem Telegramm ausgelesen werden.

Alternativ besteht weiterhin die Möglichkeit, anstatt eines Telegramms mit einem Adressbereich auch eine einfache logische Adresse in Form einer logischen Nummer zur Adressierung des jeweiligen Slave-Geräts zu verwenden, die dann zusammen mit einem Offset und einer Datenlänge in der Zuordnungstabelle der FMMU-Schnittstelle gespeichert wird.

Der gemäß der Erfindung durchgeführte Mappingvorgang durch die Schnittstelleneinheiten der Slave-Geräte kann bei allen bekannten Arten von seriellen Bussystem eingesetzt werden. Durch die Ausführung des Mappingvorgangs zwischen dem Prozessabbildern und dem Prozessdaten direkt im Slave-Gerät können die Verzögerungszeiten bei der Durchführung von Steuerungsaufgaben so gering wie möglich gehalten werden, da das Mapping in allen Slave-Geräte parallel erfolgt und somit das Gesamtsystem wesentlich entlastet wird.

## Patentansprüche

1. Verfahren zum Übertragen von Daten auf einem seriellen Bus zwischen wenigstens einem aktiven Busteilnehmer und wenigstens einem passiven Busteilnehmer, bei dem die Daten in Form von Telegrammen zwischen dem aktiven Busteilnehmer und dem passiven Busteilnehmer übertragen werden, wobei die vom aktiven Busteilnehmer auf den seriellen Bus ausgebenen Telegramme mit den Daten jeweils eine logische Adresse enthalten, die die übertragenen Daten kennzeichnet, wobei eine Zuordnungstabelle in dem passiven Busteilnehmer vorgesehen ist, in der logische Adressen von Telegrammen mit physikalischen Adressen von Datenspeicherbereichen des passiven Busteilnehmers korreliert sind, und wobei beim Durchlauf eines Telegramms auf dem seriellen Bus der passive Busteilnehmer die logische Adresse des durchlaufenden Telegramms mit den in der zuordnungstabelle gespeicherten logischen Adressen vergleicht und beim Feststellen einer Übereinstimmung einen Datenaustausch zwischen dem Telegramm und dem Datenspeicherbereich, der die der logischen Adresse zugeordnete physikalischen Adresse aufweist, durchführt.

2. Verfahren nach Anspruch 1, wobei die Zuordnungstabelle Registerdatensätze aufweist, die jeweils eine logische Adresse von über den seriellen Bus in einem Telegramm übertragenen Daten, eine physikalische Adresse des den Daten zugeordneten Datenspeicherbereichs im passiven Busteilnehmer und eine Datenübertragungsart angeben.

3. Verfahren nach Anspruch 2, wobei ein Registerdatensatz eine Startadresse von Daten in einem Telegramm auf dem seriellen Bus, eine Endadresse der Daten oder eine Länge eines Datenspeicherbereichs in dem Telegramm auf dem seriellen Bus, eine Startadresse des zugeordneten Speicherbereichs im passiven Busteilnehmer und einen Kennzeichnung der Datenübertragungsart als Lese- und/oder Schreibvorgang enthält.

4. Verfahren nach einem der Ansprüche 1 bis 3, wobei die Zuordnungstabelle im passiven Busteilnehmer während einer Initialisierungsphase erzeugt wird.

5. Verfahren nach Anspruch 4, wobei der aktive Busteilnehmer in der Initialisierungsphase dem passiven Busteilnehmer die logische Adressen von für den passiven Busteilnehmer relevanten Daten in den Telegrammen mitteilt und der passive Busteilnehmer den logischen Adressen jeweils physikalische Adressen von entsprechenden Datenspeicherbereichen zuordnet.

6. Verfahren nach einem der Ansprüche 1 bis 5, wobei der serielle Bus ein Feldbus ist, Daten im aktiven Busteilnehmer in Form von Prozessabbildern für Steuerungsaufgaben und Daten im passiven Busteilnehmer in Form von Prozessdaten vorliegen, wobei auf dem Feldbus Telegramme mit den Prozessabbilder übertragen werden, und wobei bei einer Datenübergabe zwischen dem Feldbus und dem passiven Busteilnehmer die Prozessdaten im passiven Busteilnehmer den jeweiligen Prozessabbildern in den auf dem Feldbus zirkulierenden Telegrammen zugeordnet werden.

7. Serielles Bussystem mit wenigstens einem aktiven Busteilnehmer (2) und wenigstens einem passiven Busteilnehmer (3), wobei der aktive Busteilnehmer (2) die Daten in Form von Telegrammen mit einer logischen Adresse überträgt, die die im jeweiligen Telegramm enthaltenen Daten kennzeichnet, wobei der passiven Busteilnehmer eine Zuordnungstabelle (33), in der logische Adressen von Telegrammen mit physikalischen Adressen von Datenspeicherbereichen (34) des passiven Busteilnehmers korreliert sind, und eine Zuordnungseinheit (33), um beim Durchlauf eines Telegramms auf dem seriellen Bus (1) die logische Adresse des Telegramms mit den in der Zuordnungstabelle gespeicherten logischen Adressen zu vergleichen und beim Feststellen einer Übereinstimmung einen Datenaustausch zwischen dem zugeordneten Datenspeicherbereich und dem Telegramm durchzuführen, aufweist.

8. Bussystem nach Anspruch 7, wobei die Zuordnungstabelle Registerdatensätze aufweist, die jeweils einen logische Adresse von über den seriellen Bus in einem Telegramm übertragenen Daten, eine physikalische Adresse des den Daten zugeordneten Datenspeicherbereichs im passiven Busteilnehmer und eine Datenübertragungsart angeben.

9. Bussystem nach Anspruch 7 oder 8, wobei der serielle Bus (1) ein Feldbus ist, Daten im aktiven Busteilnehmer (2) in Form von Prozessabbildern für Steuerungsaufgaben und Daten im passiven Busteilnehmer (3) in Form von Prozessdaten vorliegen, wobei die Zuordnungseinheit (33) des passiven Busteilnehmers den Datenspeicher (34) im passiven Busteilnehmer, der die Prozessdaten enthält, mit dem Feldbus verbindet, um bei einem Datenübergabe zwischen dem Feldbus und dem passiver Busteilnehmer die Prozessdaten im Datenspeicher den in den Telegrammen auf dem Feldbus enthaltenden Prozessabbildern zuzuordnen.

10. Bussystem nach Anspruch 9**,** wobei der aktive Busteilnehmer eine Feldbusanschaltung (23) aufweist, die die Übergabe der Prozessabbilder zwischen einer Datenverarbeitungseinheit im aktive Busteilnehmer (2) und dem Feldbus (1) ausführt.

11. Anschalteinheit für einen passiven Busteilnehmer in einem seriellen Bussystem zum Ausführen einer Datenübergabe mit einem Bus (1), an dem wenigstens ein aktiver Busteilnehmer (2) und der passive Busteilnehmer (3) angeschlossen sind, wobei der aktive Busteilnehmer (2) die Daten in Form von Telegrammen mit einer logischen Adresse überträgt, die die im jeweiligen Telegramm enthaltenen Daten kennzeichnet, umfassend eine Zuordnungseinheit (33) mit einer Zuordnungstabelle, in der logische Adressen von Telegrammen mit physikalischen Adressen von Datenspeicherbereichen des passiven Busteilnehmers korreliert sind, und eine Steuereinheit (33), um beim Durchlauf eines Telegramms auf dem seriellen Bus die logische Adresse des Telegramm mit den in der Zuordnungstabelle gespeicherten logischen Adressen zu vergleichen und beim Feststellen einer Übereinstimmung einen Datenaustausch zwischen dem zugeordneten Datenspeicherbereich und dem Telegramm durchzuführen.

12. Anschalteinheit nach Anspruch 11, wobei die Zuordnungstabelle Registerdatensätze aufweist, die jeweils eine logische Adresse von über den seriellen Bus (1) in einem Telegramm übertragenen Daten, eine physikalische Adresse des den Daten zugeordneten Datenspeicherbereichs (34) im passiven Busteilnehmer und eine Datenübertragungsart angeben.

13. Anschalteinheit nach Anspruch 11 oder 12, wobei ein Registerdatensatz eine Startadresse von Daten in einem Telegramm auf dem seriellen Bus, eine Endadresse der Daten oder eine Länge eines Datenbereichs in dem Telegramm auf dem seriellen Bus, eine Startadresse des zugeordneten Speicherbereichs im passiven Busteilnehmer und einen Kennzeichnung der Datenübertragungsart als Lese- und/oder Schreibvorgang enthält.

14. Anschalteinheit nach einem der Ansprüche 11 bis 13, wobei die Zuordnungstabelle während einer Initialisierungsphase erzeugt wird.

## Claims

1. Method for transmitting data on a serial bus between at least one active station and at least one passive station, in which the data are transmitted in the form of telegrams between the active station and the passive station, wherein the telegrams with the data sent by the active station onto the serial bus respectively contain a logical address which characterises the transmitted data, wherein an allocation table which correlates logical addresses of telegrams with physical addresses of data storage ranges of the passive station is provided in the passive station, and wherein the passive station compares the logical address of the travelling telegram with the logical addresses stored in the allocation table when a telegram travels on the serial bus, and carries out data interchange between the telegram and the data storage range which comprises the physical address allocated to the logical address when a match is found.

2. Method according to Claim 1, wherein the allocation table comprises register data sets which respectively indicate a logical address of data transmitted in a telegram via the serial bus, a physical address of the data storage range allocated to the data in the passive station and a data transmission type.

3. Method according to Claim 2, wherein a register data set contains a start address of data in a telegram on the serial bus, an end address of the data or a length of a data storage range in the telegram on the serial bus, a start address of the allocated storage range in the passive station and a characterisation of the data transmission type as a read and/or write process.

4. Method according to one of Claims 1 to 3, wherein the allocation table in the passive station is generated during an initialisation phase.

5. Method according to Claim 4, wherein the active station communicates to the passive station the logical addresses of data in the telegrams, which are relevant for the passive station, in the initialisation phase and the passive station respectively allocates physical addresses of corresponding data storage ranges to the logical addresses.

6. Method according to one of Claims 1 to 5, wherein the serial bus is a field bus, data exist in the active station in the form of process images for control tasks and data exist in the passive station in the form of process data, wherein telegrams with the process images are transmitted on the field bus, and wherein during a data transfer between the field bus and the passive station the process data in the passive station are allocated to the respective process images in the telegrams circulating on the field bus.

7. Serial bus system having at least one active station (2) and at least one passive station (3), wherein the active station (2) transmits the data in the form of telegrams with a logical address which characterises the data contained in the respective telegram, wherein the passive station comprises an allocation table (33) in which logical addresses of telegrams are correlated with physical addresses of data storage ranges (34) of the passive station, and an allocation unit (33) for comparing the logical address of the telegram with the logical addresses stored in the allocation table when a telegram travels on the serial bus (1) and for carrying out data interchange between the allocated data storage range and the telegram when a match is found.

8. Bus system according to Claim 7, wherein the allocation table comprises register data sets which respectively indicate a logical address of data transmitted in a telegram via the serial bus, a physical address of the data storage range allocated to the data in the passive station and a data transmission type.

9. Bus system according to Claim 7 or 8, wherein the serial bus (1) is a field bus, data exist in the active station (2) in the form of process images for control tasks and data exist in the passive station (3) in the form of process data, wherein the allocation unit (33) of the passive station connects the data memory (34), which contains the process data in the passive station to the field bus, for allocating the process data in the data memory to the process images contained in the telegrams on the field bus during a data transfer between the field bus and the passive station.

10. Bus system according to Claim 9, wherein the active station comprises a field bus interface (23) which performs the transfer of the process images between a data-processing unit in the active station (2) and the field bus (1).

11. Interface unit for a passive station in a serial bus system for performing a data transfer with a bus (1) with which at least one active station (2) and the passive station (3) interface, wherein the active station (2) transmits the data in the form of telegrams with a logical address which characterises the data contained in the respective telegram, comprising an allocation unit (33) with an allocation table in which logical addresses of telegrams are correlated with physical addresses of data storage ranges of the passive station, and a control unit (33) for comparing the logical address of the telegram with the logical addresses stored in the allocation table when a telegram travels on the serial bus, and for carrying out data interchange between the allocated data storage range and the telegram when a match is found.

12. Interface unit according to Claim 11, wherein the allocation table comprises register data sets which respectively indicate a logical address of data transmitted in a telegram via the serial bus (1), a physical address of the data storage range (34) allocated to the data in the passive station and a data transmission type.

13. Interface unit according to Claim 11 or 12, wherein a register data set contains a start address of data in a telegram on the serial bus, an end address of the data or a length of a data storage range in the telegram on the serial bus, a start address of the allocated storage range in the passive station and a characterisation of the data transmission type as a read and/or write process.

14. Interface unit according to one of Claims 11 to 13, wherein the allocation table is generated during an initialisation phase.

## Revendications

1. Procédé de transmission de données sur un bus série entre au moins un utilisateur de bus actif et au moins un utilisateur de bus passif, dans lequel les données sont transmises sous forme de télégrammes entre l'utilisateur de bus actif et l'utilisateur de bus passif, dans lequel les télégrammes édités par l'utilisateur de bus actif sur le bus série contiennent avec les données respectivement une adresse logique, qui caractérise les données transmises, dans lequel un tableau d'affectation est prévu dans l'utilisateur de bus passif, dans lequel des adresses logiques de télégrammes sont corrélées avec des adresses physiques de zones de stockage de données de l'utilisateur de bus passif, et dans lequel lors du passage d'un télégramme sur le bus série l'utilisateur de bus passif compare l'adresse logique du télégramme de passage avec les adresses logiques enregistrées dans le tableau d'affectation et, lors d'une constatation d'un accord procède à un échange de données entre le télégramme et la zone de stockage de données, qui présente l'adresse physique affectée à l'adresse logique.

2. Procédé selon la revendication 1, dans lequel le tableau d'affectation présente des jeux de données de registre, qui indiquent respectivement une adresse logique de données transmises par l'intermédiaire du bus série dans un télégramme, une adresse physique de la zone de stockage de données affectée aux données dans l'utilisateur de bus passif et un type de transmission de données.

3. Procédé selon la revendication 2, dans lequel un jeu de données de registre contient une adresse de démarrage de données dans un télégramme sur le système de bus série, une adresse finale des données ou une longueur d'une zone de stockage de données dans le télégramme sur le bus série, une adresse de démarrage de la zone de stockage affectée dans l'utilisateur de bus passif et une caractéristique du type de transmission de données comme procédé de lecture et/ou d'écriture.

4. Procédé selon l'une quelconque des revendications 1 à 3, dans lequel le tableau d'affectation dans l'utilisateur de bus passif est produit pendant une phase d'initialisation.

5. Procédé selon la revendication 4, dans lequel l'utilisateur de bus actif dans la phase d'initialisation communique à l'utilisateur de bus passif les adresses logiques de données importantes pour l'utilisateur de bus passif dans les télégrammes et l'utilisateur de bus passif affecte aux adresses logiques respectivement des adresses physiques de zones de stockage de données correspondantes.

6. Procédé selon l'une quelconque des revendications 1 à 5, dans lequel le bus série est un bus de champ, il existe des données dans l'utilisateur de bus actif sous forme de schémas de processus pour des tâches de commande et des données dans l'utilisateur de bus passif sous forme de données de processus, dans lequel sur le bus de champ des télégrammes sont transmis avec des schémas de processus, et dans lequel lors d'une transmission de données entre le bus de champ et l'utilisateur de bus passif, les données de processus dans l'utilisateur de bus passif sont affectées aux schémas de processus respectifs dans les télégrammes circulant sur le bus de champ.

7. Système de bus série avec au moins un utilisateur de bus actif (2) et au moins un utilisateur de bus passif (3), dans lequel l'utilisateur de bus actif (2) transmet les données sous forme de télégrammes avec une adresse logique, qui caractérise les données contenues dans chaque télégramme, dans lequel l'utilisateur de bus passif présente un tableau d'affectation (33) dans lequel des adresses logiques de télégrammes sont corrélées avec des adresses physiques de zones de stockage de données (34) de l'utilisateur de bus passif, et une unité d'affectation (33), pour comparer lors du passage d'un télégramme sur le bus série (1) l'adresse logique du télégramme avec les adresses logiques enregistrées dans le tableau d'affectation et lors de la constatation d'un accord, procéder à un échange de données entre la zone de stockage de données affectée et le télégramme.

8. Système de bus série selon la revendication 7, dans lequel le tableau d'affectation présente des jeux de données de registre, qui indiquent respectivement une adresse logique de données transmises par l'intermédiaire du bus série dans un télégramme, une adresse physique de la zone de stockage de données affectée aux données dans l'utilisateur de bus passif et un type de transmission de données.

9. Système de bus série selon la revendication 7 ou 8, dans lequel le bus série (1) est un bus de champ, il existe des données dans l'utilisateur de bus actif (2) sous forme de schémas de processus pour des tâches de commande et des données dans l'utilisateur de bus passif (3) sous forme de données de processus, dans lequel l'unité d'affectation (33) de l'utilisateur de bus passif, qui contient les données de processus, relie le stockage de données (34) avec le bus de champ, pour affecter lors d'une transmission de données entre le bus de champ et l'utilisateur de bus passif les données de processus dans la zone de stockage aux schémas de processus contenus dans les télégrammes sur le bus de champ.

10. Système de bus selon la revendication 9, dans lequel l'utilisateur de bus actif présente une connexion de bus de champ (23), qui procède à la transmission des schémas de processus entre une unité de traitement de données dans l'utilisateur de bus actif (2) et le bus de champ (1).

11. Unité de connexion pour un utilisateur de bus passif dans un système de bus série pour l'exécution d'une transmission de données avec un bus (1), auquel est relié au moins un utilisateur de bus actif (2) et l'utilisateur de bus passif (3), dans laquelle l'utilisateur de bus actif (2) transmet les données sous forme de télégrammes avec une adresse logique, qui caractérise les données contenues dans chaque télégramme, comprenant une unité d'affectation (33) avec un tableau d'affectation dans lequel des adresses logiques de télégrammes sont corrélées avec des adresses physiques de zones de stockage de données de l'utilisateur de bus passif, et une unité de commande (33), pour comparer lors du passage du télégramme sur le bus série l'adresse logique du télégramme avec les adresses logiques enregistrées dans le tableau d'affectation et lors de la constatation d'un accord, procéder à un échange de données entre la zone de stockage de données affectée et le télégramme .

12. Unité de connexion selon la revendication 11, dans laquelle le tableau d'affectation présente des jeux de données de registre qui indiquent respectivement une adresse logique de données transmises par l'intermédiaire du bus série (1) dans un télégramme, une adresse physique de la zone de stockage de données (34) affectée aux données dans l'utilisateur de bus passif et un type de transmission de données.

13. Unité de connexion selon la revendication 11 ou 12, dans laquelle un jeu de données de registre contient une adresse de démarrage de données dans un télégramme sur le bus série, une adresse finale des données ou une longueur d'une zone de données dans le télégramme sur le bus série, une adresse de démarrage dans le télégramme sur le bus série, une adresse de démarrage de la zone de stockage affectée dans l'utilisateur de bus passif et une caractéristique du type de transmission de données comme procédé de lecture et/ou d'écriture.

14. Unité de connexion selon l'une quelconque des revendications 11 à 13, dans laquelle le tableau d'affectation est produit pendant une phase d'initialisation.
